Europäisches Patentamt

European Patent Office

Office européen des brevets

(19)

(11) **EP 1 039 736 B1**

(12) **FASCICULE DE BREVET EUROPEEN**

(45) Date de publication et mention
de la délivrance du brevet:
**29.11.2006 Bulletin 2006/48**

(51) Int Cl.:
*H04M 9/08* (2006.01)    *H04B 3/23* (2006.01)

(21) Numéro de dépôt: **00400787.8**

(22) Date de dépôt: **22.03.2000**

(54) **Procédé et disposiif d'identification adaptive, et annuleur d'écho adaptive mettant en oeuvre un tel procédé**

Verfahren und Vorrichtung zur adaptiven Identifikation und entsprechender adaptiver Echokompensator

Method and device for adaptive identification and related adaptive echo canceller

(84) Etats contractants désignés:
**DE GB IT**

(30) Priorité: **26.03.1999 FR 9903822**

(43) Date de publication de la demande:
**27.09.2000 Bulletin 2000/39**

(73) Titulaire: **FRANCE TELECOM**
**75015 Paris (FR)**

(72) Inventeurs:
• **Scalart, Pascal**
**22560 Trebeurden (FR)**
• **Bouteille, Franck**
**22300 Lannion (FR)**

(74) Mandataire: **Loisel, Bertrand**
**Cabinet Plasseraud**
**52 rue de la Victoire**
**75440 Paris Cedex 09 (FR)**

(56) Documents cités:
**US-A- 5 428 562        US-A- 5 734 715**

• **SCALART P ET AL: "A system for speech enhancement in the context of hands-free radiotelephony with combined noise reduction and acoustic echo cancellation" SPEECH COMMUNICATION,NL,ELSEVIER SCIENCE PUBLISHERS, AMSTERDAM, vol. 20, no. 3, page 203-214 XP004016545 ISSN: 0167-6393**

Printed by Jouve, 75001 PARIS (FR)

**Description**

La présente invention concerne de façon générale les techniques d'identification adaptative. Elle trouve une application particulière, non exclusive, dans les annuleurs d'écho utilisés en télécommunications.

L'identification adaptative de systèmes linéaires caractérisés par leur réponse impulsionnelle a été largement étudiée, et de nombreuses solutions algorithmiques ont été proposées dans la littérature.

On considère le problème général de l'identification directe par filtrage adaptatif transverse, ce qui correspond à la grande majorité des applications pratiques.

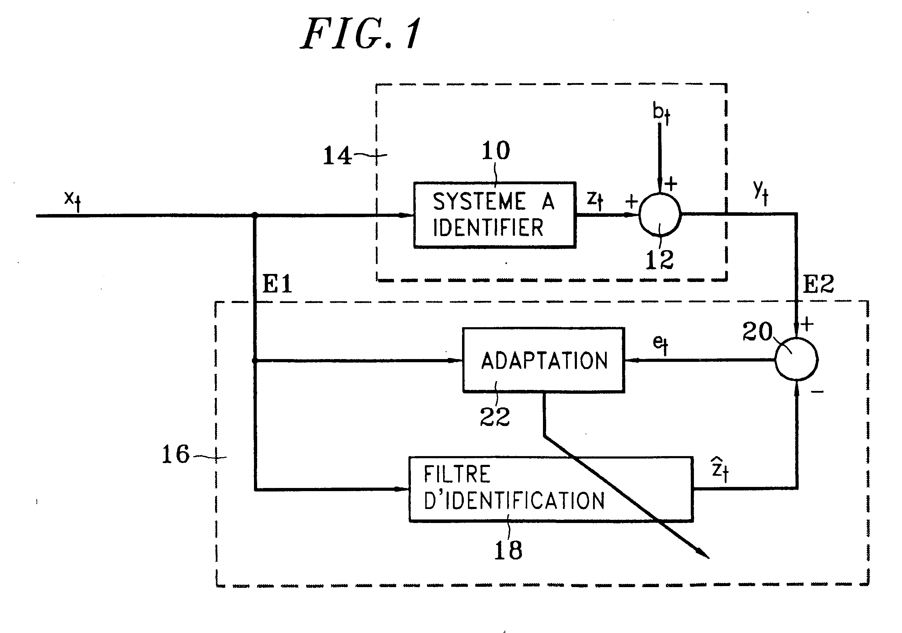

La figure 1 montre un système à identifier 10 auquel est appliqué un signal $x_t$ variant dans le temps. On note $z_t$ la réponse du système 10 au signal d'entrée $x_t$. La mesure de la réponse $z_t$ s'accompagne inévitablement de l'adjonction d'une composante de perturbation $b_t$ appelée bruit d'observation. Ce bruit d'observation $b_t$ peut comprendre du bruit à proprement parler (bruit blanc ou bruit routier par exemple), mais également du signal utile. La composante $b_t$ est appelée bruit d'observation dans la mesure où elle perturbe l'observation de la réponse $z_t$. L'additionneur 12 symbolise sur la figure l'adjonction de la composante de perturbation $b_t$, supposée additive, à la réponse $z_t$. Le signal d'observation mesuré $y_t$ est ainsi la réponse d'un système réel 14 incluant le système à identifier 10 et l'additionneur 12.

Le dispositif d'identification adaptative 16 reçoit le signal d'entrée $x_t$ sur une première entrée E1, et le signal d'observation $y_t$ sur une seconde entrée E2. Les signaux $x_t$ et $y_t$ sont amplifiés, filtrés et numérisés à l'entrée du dispositif 16 par des éléments classiques non représentés. Le dispositif d'identification adaptative 16 comporte un filtre d'identification 18 consistant en un filtre programmable à réponse impulsionnelle finie ou FIR (« *Finite Impulse Response* »)

notée $H_{t-1}^T = \left( h_{t-1}^0, h_{t-1}^1, \cdots, h_{t-1}^{L-1} \right)$, où $(.)^T$ désigne la transposition matricielle. Les coefficients du filtre d'identification 18 sont adaptés pour que cette réponse impulsionnelle $H_{t-1}^T$ soit représentative de la réponse impulsionnelle du système à identifier 10. Le filtre 18 reçoit le signal d'entrée numérisé $x_t$, et délivre une estimation $\hat{z}_t$ de la réponse $z_t$ du système 10.

Un soustracteur 20 retranche cette estimation $\hat{z}_t$ du signal d'observation numérisé $y_t$ pour fournir un signal d'erreur et. Ce signal d'erreur et peut être vu comme une estimation de la composante de perturbation $b_t$.

Une unité 22 de mise à jour du filtre d'identification adapte les coefficients du filtre 18 sur la base du signal d'entrée $x_t$ et du signal d'erreur et, en prenant en compte généralement un pas d'adaptation μ.

De nombreux algorithmes ont été proposés pour déterminer de façon automatique les coefficients du filtre adaptatif 18. La mise en oeuvre de ces dispositifs amène généralement leurs concepteurs à étudier le compromis devant être réalisé entre rapidité de convergence de l'algorithme, simplicité de contrôle et de mise en oeuvre, complexité arithmétique, et stabilité numérique.

L'algorithme LMS (« *Least Mean Square* ») est l'algorithme le plus répandu pour adapter de façon continue au cours du temps la réponse impulsionnelle d'un filtre d'identification de type FIR. Un tel algorithme permet d'implémenter de manière particulièrement efficace le filtre de Wiener à L coefficients qui minimise, selon l'approximation stochastique, la valeur moyenne de la puissance de l'erreur de filtrage. Il est défini par les relations :

$$e_t = y_t - X_t^T H_{t-1} \qquad (1)$$

$$H_t = H_{t-1} + \mu e_t X_t \qquad (2)$$

où $X_t = (x_t, x_{t-1}, ..., x_{t-L+1})^T$ représente le vecteur des L derniers échantillons du signal d'entrée, et μ représente le pas d'adaptation de l'algorithme. Les principaux atouts de cet algorithme sont sa faible complexité numérique, sa simplicité d'implémentation et sa robustesse aux erreurs. Malheureusement, lorsque des signaux fortement corrélés (tels que des signaux de parole) sont utilisés pour exciter le système inconnu, cet algorithme possède une vitesse de convergence qui se dégrade rapidement.

Pour s'affranchir de ces inconvénients, il est souvent fait usage d'une version spécifique de l'algorithme LMS intégrant un pas d'adaptation paramétrisé. Cet algorithme correspond alors à une version normalisée du LMS, ou NLMS (« *Normalized Least Mean Square* »*)* dans laquelle les coefficients du filtre adaptatif sont mis à jour selon la relation suivante :

$$H_t = H_{t-1} + \frac{\mu e_t}{X_t^T X_t} X_t \qquad (3)$$

En supposant que le filtre optimal $H^{opt}$ du système inconnu 10 soit un filtre de type FIR d'ordre inférieur ou égal à L la relation (3) peut s'écrire :

$$\Delta H_t = \left[ I - \mu X_t \left( X_t^T X_t \right)^{-1} X_t^T \right] \Delta H_{t-1} - \mu X_t \left( X_t^T X_t \right)^{-1} b_t \qquad (4)$$

où $\Delta H_t = H^{opt} - H_t$ représente l'erreur dans les coefficients estimés du filtre à l'itération t. Cette expression correspond à une interprétation géométrique de l'algorithme NLMS. Dans les cas où $\mu \neq 1$, l'équation (4) correspond à une projection relâchée du vecteur $\Delta H_{t-1}$ sur un sous-espace affine complètement déterminé par la matrice comprise entre les crochets et par la connaissance du décalage à l'origine donné par le dernier terme de la relation (4).

Afin d'apporter de nouveaux algorithmes offrant une rapidité de convergence supérieure à celle de l'algorithme NLMS, plusieurs approches ont été proposées dans la littérature (implémentation dans le domaine fréquentiel, filtrage en sous-bandes...). On considère ci-dessous celles basées sur une modification de la direction de projection du NLMS, ainsi que celles basées sur l'utilisation d'un filtre blanchissant.

*Amélioration de la convergence par modification de la direction de projection*

Il est possible d'améliorer la convergence du NLMS en modifiant la direction de la projection mentionnée ci-dessus. Cette analyse est à l'origine des algorithmes de projection affine, ou APA (« *Affine Projection Algorithm* ») qui sont basés sur une projection d'ordre multiple égal à P. Ces algorithmes possèdent de ce fait de bien meilleures propriétés de convergence sur des signaux corrélés en comparaison avec l'algorithme NLMS (qui correspond au cas limite où P=1). Les algorithmes APA d'ordre P (voir K. Oseki et al., « An adaptative algorithm using an orthogonal projection to an affine subspace and its properties », Electronics and communications in Japan, 1984, Vol. 67-A, n° 5, pages 19-27) sont caractérisés par la mise à jour des coefficients du filtre d'identification 18 suivant les relations :

$$e_{t,P} = Y_{t,P} - \underline{X}_{t,P} H_{t-1} \qquad (5)$$

$$H_t = H_{t-1} + \mu \underline{X}_{t,P}^{\#} e_{t,P} \qquad (6)$$

avec :

$$\underline{X}_{t,P} = \left( X_t, X_{t-1}, \cdots, X_{t-P+1} \right)^T \qquad (7)$$

$$Y_{t,P} = \left( y_t, y_{t-1}, \cdots, y_{t-P+1} \right)^T \qquad (8)$$

où $e_{t,P}$ désigne le vecteur d'erreurs a priori, et $\underline{X}_{t,P}^{\#} = \underline{X}_{t,P}^T \left( \underline{X}_{t,P} \underline{X}_{t,P}^T \right)^{-1}$ représente la matrice inverse généralisée de Moore-Penrose d'ordre LxP. Ces équations de mise à jour des coefficients du filtre d'identification permettent de montrer que le vecteur d'erreurs d'estimations a posteriori $e_{t,P}^{post}$ est égal à :

$$e_{t,P}^{post} = Y_{t,P} - \underline{X}_{t,P} H_t = (1-\mu)e_{t,P} \qquad (9)$$

En considérant le pas d'adaptation de l'algorithme égal à l'unité, l'algorithme de projection affine d'ordre P annule les P erreurs a posteriori définies à la relation (9). Cette dernière propriété explique le très bon comportement en vitesse de convergence de cet algorithme. Malheureusement, dans sa version de base décrite par les relations (5) et (6), la complexité théorique de tels algorithmes est de l'ordre de $2LP + K_{inv}P^2$ où $K_{inv}$ représente une constante associée au calcul de la matrice inverse intervenant dans l'expression (6), les paramètres L et P désignant respectivement le nombre de coefficients du filtre d'identification et l'ordre de projection.

Afin de réduire cette complexité initiale, plusieurs versions rapides de ces algorithmes ont été proposées en segmentant la pseudo-matrice d'autocorrélation de façon similaire aux algorithmes des moindres carrés récursifs rapides. De telles techniques permettent ainsi de réduire la complexité initiale à des valeurs plus raisonnables de l'ordre de 2L + 20P (voir : Steven L. Gay, US 5 428 562, 27 Juin 1995; Steven L. Gay, « A fast converging, low complexity adaptive filtering algorithm », Proceeding of the 3rd International Workshop on Acoustic Echo and Noise Control, Plestin-Les-Grèves, France 1993, pages 223-226 ; Steven L. Gay, « Fast projection algorithms with application to voice echo cancellation », Ph.D. Dissertation of the State University of New Jersey, USA, 1994 ; Steven L. Gay et al., « The fast affine projection algorithm », Proceeding of ICASSP'95, pages 3023-3026, 1995; M. Montazéri, « Une famille d'algorithmes adaptatifs comprenant les algorithmes NLMS et RLS : application à l'annulation d'écho acoustique », Thèse de Doctorat de l'Université de Paris Sud, 1994 ; M. Tanaka et al., « Reduction of computation for high-order projection algorithm », Electronics Information Communication Society Autumn Seminar, Tokyo, 1993).

*Amélioration de la convergence par insertion d'un filtrage blanchissant*

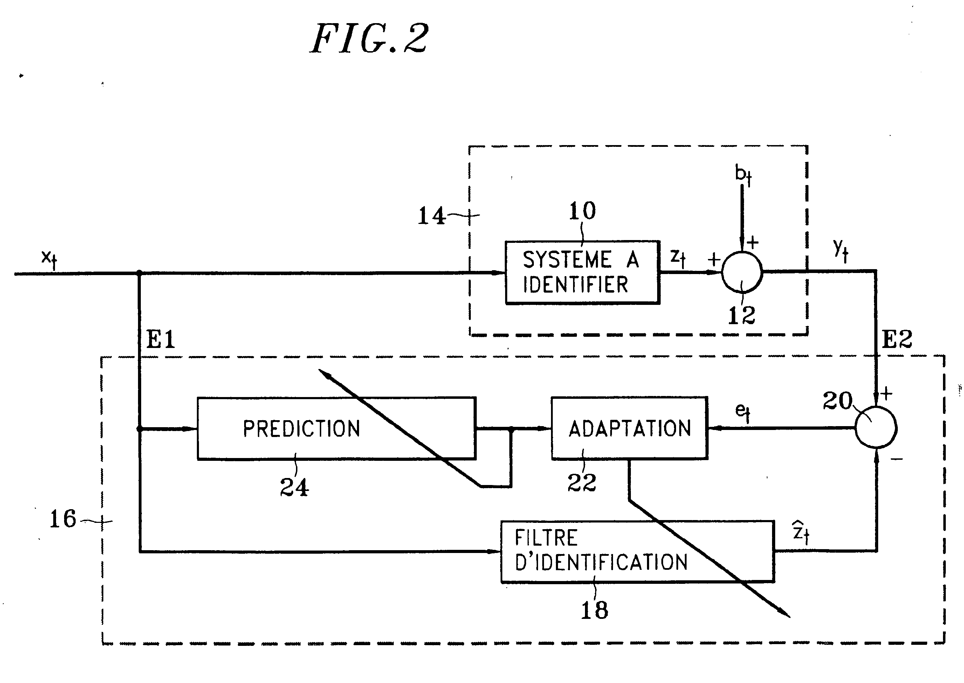

Plusieurs travaux de recherche ont été consacrés à l'étude de l'amélioration des performances des systèmes d'identification adaptative à travers l'emploi de structures prédictives (voir : M. Mboup et al., « LMS coupled adaptive prediction and system identification : a statistical model and transient analysis », IEEE Transactions on signal processing, Vol. 42, n° 10, octobre 1994, pages 2607-2615; S. Benjebara, « Caractéristiques des signaux et capacité de poursuite des non-stationnarités aléatoires : apport des schémas prédictifs et multirésolutions », Thèse de l'Université des Sciences, des Techniques et de Médecine de Tunis II, Tunis, 1997). Ces études ont permis de dégager principalement deux structures (symétrique ou non-symétrique) de pré-blanchiment du signal d'excitation du filtre par une technique de filtrage adaptatif. Le principe général de traitement de la structure non-symétrique est schématisé à la figure 2.

Une telle structure repose essentiellement sur une démarche empirique visant à modifier le signal utilisé dans la mise à jour des coefficients du filtre adaptatif et à le transformer de façon à réduire le conditionnement de sa matrice d'autocorrélation (rapport entre les valeurs propres maximales et minimales de la matrice d'autocorrélation de ce signal). De ce fait, la mise à jour des coefficients est réalisée par le module d'adaptation 22 à partir du signal disponible en sortie d'un circuit de prédiction linéaire 24, la prédiction étant réalisée à partir de M coefficients. L'algorithme appliqué par le module 22 pour mettre à jour les L coefficients du filtre d'identification 18 correspond au LMS (relation (2)) ou au NLMS (relation (3)). De même, le circuit de prédiction 24 est implémenté sous la forme d'un filtre adaptatif à M coefficients dont la mise à jour est réalisée à l'aide d'un algorithme LMS.

Les études consacrées à l'analyse des performances obtenues à partir de ce type de structure ont notamment mis en évidence l'existence d'une interaction très forte entre les modules de prédiction et d'adaptation du système. Ceci entraîne notamment une interdépendance entre les équations d'adaptation des coefficients du prédicteur adaptatif 24 et celles du filtre d'identification 18. Cette forte dépendance se retrouve également dans le choix des deux pas d'adaptation $\mu_P$ et $\mu_H$, ce qui engendre une zone de stabilité très réduite de la structure complète.

En conséquence, les auteurs mentionnent une instabilité du système complet d'identification par structure prédictive, ce qui limite les ordres de prédiction utilisés dans les réalisations à des valeurs toujours inférieures à quatre afin d'assurer une relative stabilité, ceci limite les performances de l'identification : on est amené à choisir des pas d'adaptation $\mu_P$ et $\mu_H$ très faibles, non compatibles avec l'objectif d'amélioration de la rapidité de convergence.

L'examen des solutions proposées dans la littérature pour améliorer la rapidité de convergence des algorithmes d'identification adaptative conduit à conclure d'une part que les algorithmes basés sur une modification de la direction de projection restent complexes en termes de nombre d'opérations arithmétiques requises pour la mise à jour des coefficients du filtre lorsque l'ordre de projection P est élevé, et d'autre part que les schémas à base d'identification par structure prédictive restent très délicats à contrôler et offrent un gain de convergence réduit du fait des faibles ordres de prédiction M utilisés en pratique afin d'assurer une relative stabilité de la structure globale.

La présente invention a pour but de proposer un procédé d'identification adaptative qui présente de bonnes propriétés de convergence et qui soit d'une mise en oeuvre relativement simple et d'une complexité arithmétique limitée.

L'invention propose ainsi un procédé d'identification adaptative pour estimer la réponse d'un système à un signal d'entrée, dans lequel : on reçoit d'une part le signal d'entrée et d'autre part un signal d'observation dont une composante est ladite réponse au signal d'entrée ; on détermine un signal d'erreur $e_t$ à un instant t selon l'expression

$$e_t = y_t - X_t^T H_{t-1}$$, où $y_t$ désigne la valeur du signal d'observation à l'instant t, $H_{t-1}$ est un vecteur-colonne composé de L coefficients d'un filtre d'identification à réponse impulsionnelle finie représentative de la réponse impulsionnelle du système, et $X_t^T = (x_t, x_{t-1}, \cdots, x_{t-L+1})$ est un vecteur-ligne composé des valeurs $x_t$, $x_{t-1}, \cdots$, $x_{t-L+1}$ du signal d'entrée à l'instant t et aux L-1 instants précédents ; et on adapte les L coefficients du filtre d'identification en tenant compte du signal d'entrée et du signal d'erreur. Suivant l'invention, on obtient des paramètres de prédiction du signal d'entrée, minimisant l'énergie d'un résidu de prédiction sur des trames successives du signal d'entrée, et l'adaptation des L coefficients du filtre d'identification consiste à ajouter au vecteur-colonne $H_{t-1}$ un vecteur-colonne proportionnel

à $\dfrac{e_t}{X_t^T U_t + \lambda} U_t$, où $U_t$ est un vecteur-colonne composé des L valeurs du résidu de prédiction du signal d'entrée à l'instant t et aux L-1 instants précédents, et $\lambda$ un coefficient positif ou nul.

Dans des modes d'exécution préférés du procédé :

- les trames du signal d'entrée ont une durée d'au moins 5 ms ;
- les trames du signal d'entrée présentent des recouvrements mutuels ;
- on effectue une analyse par prédiction linéaire d'ordre P-1 du signal d'entrée, d'ordre P-1 de préférence égal à 5 ou plus, et le vecteur-colonne $U_t$ a pour expression $U_t = X_t + \sum_{q=1}^{P-1} a_q X_{t-q}$, où les $a_q$ désignent les coefficients de prédiction linéaire résultant de ladite analyse. L'ordre P-1 de la prédiction linéaire peut également être une fonction d'une stationnarité estimée du signal d'entrée ;

- le signal d'entrée est un signal de parole restitué par un décodeur à partir d'un flux binaire d'entrée, et les paramètres de prédiction du signal d'entrée sont extraits du flux binaire d'entrée par le décodeur qui peut en outre fournir le résidu de prédiction pour l'adaptation des L coefficients du filtre d'identification.

Un autre aspect de l'invention se rapporte à un dispositif d'identification adaptative d'un système auquel est appliqué un signal d'entrée, comprenant : une première entrée recevant le signal d'entrée ; une seconde entrée recevant un signal d'observation dont une composante est une réponse du système au signal d'entrée; un filtre d'identification à réponse impulsionnelle finie représentative de la réponse impulsionnelle du système ; un soustracteur produisant un signal d'erreur et ayant l'expression (1) ci-dessus ; des moyens pour obtenir des paramètres de prédiction du signal d'entrée, minimisant l'énergie d'un résidu de prédiction sur des trames successives du signal d'entrée ; et des moyens d'adaptation mettant à jour les L coefficients du filtre d'identification en ajoutant au vecteur-colonne $H_{t-1}$ le vecteur-

colonne proportionnel à $\dfrac{e_t}{X_t^T U_t + \lambda} U_t$.

Un autre aspect de l'invention se rapporte à un annuleur d'écho adaptatif pour enlever d'un signal de retour des composantes d'écho d'un signal direct, comprenant un dispositif d'identification du type énoncé ci-dessus, dont la première entrée reçoit le signal direct en tant que signal d'entrée et dont la seconde entrée reçoit le signal de retour en tant que signal d'observation, le signal d'erreur constituant le signal de sortie de l'annuleur d'écho.

D'autres particularités et avantages de la présente invention apparaîtront dans la description ci-après d'exemples de réalisation non limitatifs, en référence aux dessins annexés, dans lesquels :

- les figures 1 et 2, précédemment commentées, sont des schémas synoptiques de dispositifs d'identification adaptative de l'art antérieur ;

- la figure 3 est un schéma synoptique d'un annuleur d'écho incorporant un dispositif d'identification adaptative selon l'invention ; et
- la figure 4 est un schéma synoptique d'une autre forme de réalisation d'un annuleur d'écho selon l'invention.

Dans le cas de signaux stationnaires, on peut établir la relation suivante entre les coefficients $a_1$, ..., $a_{P-1}$ de prédiction linéaire d'ordre P-1 du signal d'entrée $x_t$ et l'inverse $R_{t,P}^{-1}$ de la matrice d'autocorrélation $R_{t,P} = \underline{X}_{t,P}\,\underline{X}_{t,P}^T$ du signal (la matrice $\underline{X}_{t,P}$ étant définie par la relation (7)) :

$$\begin{pmatrix} 1 \\ a_1 \\ \vdots \\ a_{P-1} \end{pmatrix} = R_{t,P}^{-1} \begin{pmatrix} X_t^T U_t \\ 0 \\ \vdots \\ 0 \end{pmatrix} \tag{10}$$

avec :

$$U_t = X_t + \sum_{q=1}^{P-1} a_q X_{t-q} \tag{11}$$

Si on considère l'algorithme APA d'ordre P défini plus haut avec un pas d'adaptation $\mu=1$, la nullité des erreurs a posteriori (équation (9)) simplifie le vecteur d'erreurs a priori (5) : $e_{t,P} = (e_t,0,\cdots,0)^T$, de sorte que la formule (6) d'adaptation du filtre d'identification devient, compte tenu de la relation (10) :

$$H_t = H_{t-1} + \frac{e_t}{X_t^T U_t} U_t \tag{12}$$

Sur cette base, on peut définir une variante de l'algorithme APA d'ordre P, ci-après appelée « algorithme pseudo-APA d'ordre P », dans laquelle on réintroduit un pas d'adaptation $\mu$ et éventuellement une constante de régularisation positive $\lambda$. Dans l'algorithme pseudo-APA, le signal d'erreur est défini par la relation (1), et le filtre d'identification est mis à jour selon :

$$H_t = H_{t-1} + \frac{\mu e_t}{X_t^T U_t + \lambda} U_t \tag{13}$$

Le pas d'adaptation $\mu$ est typiquement compris entre 0,1 et 1, et $\lambda \geq 0$. Par rapport à la structure d'identification par prédiction décrite précédemment, l'algorithme pseudo-APA d'ordre P présente deux différences importantes :

- les coefficients de prédiction $a_q$ sont évalués non plus au rythme des échantillons mais à un rythme de blocs. Ils correspondent à la minimisation de l'énergie de prédiction linéaire sur des trames de taille N échantillons. Des techniques efficaces d'implémentation peuvent être utilisées afin d'estimer l'ensemble $\{a_q ; q=1, ..., P-1\}$ des coefficients du filtre prédicteur.
- l'équation (13) de mise à jour des coefficients du filtre d'identification $H_{t-1}$ ne correspond pas à celle utilisée dans les travaux antérieurs. En effet, ces travaux reposent essentiellement sur une approche empirique visant à pré-blanchir le signal d'excitation afin d'améliorer la vitesse de convergence des modes, celle-ci étant proportionnelle au conditionnement de la matrice d'autocorrélation du signal d'excitation. De ce fait, les algorithmes LMS ou NLMS proposés par les auteurs pour la mise à jour des coefficients du filtre d'identification (et également du prédicteur) ne correspondent pas à celui de la relation (13). Ces algorithmes diffèrent par le terme de normalisation présent dans l'équation de mise à jour des coefficients du filtre, le terme de la forme $\left(U_t^T U_t\right)^{-1}$ du NLMS étant remplacé dans la relation (13) par un terme composite $\left(X_t^T U_t\right)^{-1}$ ou $\left(X_t^T U_t + \lambda\right)^{-1}$.

Le procédé selon l'invention résout la problématique fréquemment posée par la forte corrélation des signaux à traiter. En effet, dans ce dernier cas, les algorithmes classiques tendent à perdre leurs bonnes propriétés de convergence. Le procédé selon l'invention permet intrinsèquement de conserver ces bonnes propriétés de convergence même en présence de signaux fortement corrélés, ce qui est souvent le cas en pratique. Il permet, en outre, de conserver une complexité arithmétique limitée ce qui représente un très grand avantage pour l'implémentation en temps réel de ces algorithmes d'identification sur processeurs de traitement du signal.

L'algorithme pseudo-APA est à la base d'une nouvelle famille de dispositifs d'identification adaptative qui peuvent être utilisés dans divers domaines d'application (annulation d'écho, égalisation de canaux de propagation, commande automatique de processus, etc.). On considère ci-après, sans que cela soit limitatif, l'exemple de l'annulation d'écho acoustique.

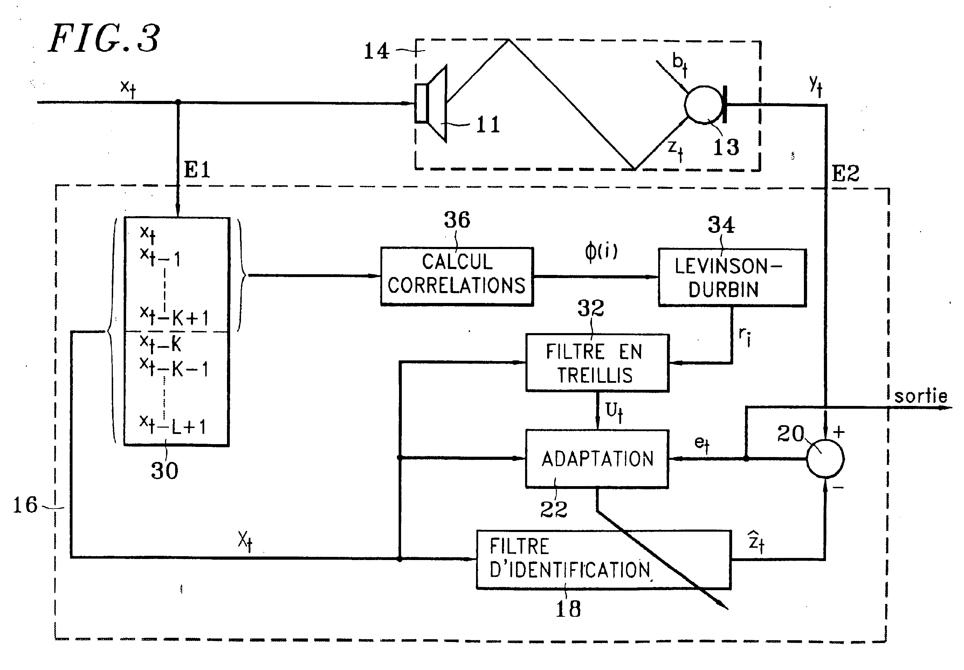

La figure 3 montre un annuleur d'écho adaptatif incorporant un dispositif d'identification adaptative 16 selon l'invention. L'annuleur d'écho est associé à une installation téléphonique mains-libres. Le signal d'entrée $x_t$, reçu sur l'entrée E1 du dispositif, est le signal direct destiné au haut-parleur 11 de l'installation mains-libres. Le signal d'observation $y_t$, reçu sur l'entrée E2 du dispositif, est le signal de retour recueilli par le microphone 13 de l'installation mains-libres. Ce signal d'observation $y_t$ inclut des composantes d'écho $z_t$ du signal direct, et des composantes de perturbation $b_t$ pouvant inclure du bruit et de la parole émise par le locuteur. Dans ce cas, le système à identifier consiste en le ou les trajets d'écho entre le haut-parleur 11 et le microphone 13.

Le signal de sortie de l'annuleur d'écho est le signal d'erreur et délivré par le soustracteur 20 à partir du signal d'observation $y_t$ et de l'estimation d'écho $\hat{z}_t$ produite par le filtre d'identification 18.

Les fenêtres temporelles du signal d'entrée $x_t$ sont gérées par un module 30 qui mémorise au moins les L derniers échantillons $x_t, x_{t-1},..., x_{t-L+1}$. Ces L échantillons, qui forment le vecteur $X_t$, sont fournis : (i) au filtre d'identification 18 qui procède au filtrage conformément au dernier terme de la relation (1) ; (ii) au module d'adaptation 22 qui met à jour les coefficients du filtre 18 suivant la relation (13) ; et (iii) au filtre de prédiction 32 qui fournit au module d'adaptation 22 le vecteur $U_t$ défini par la relation (11), composé des L dernières valeurs du résidu de prédiction.

A chaque instant t, il suffit que le filtre 32 produise la première composante du vecteur $U_t$, c'est-à-dire la valeur courante du résidu égale à $x_t + \sum\limits_{q=1}^{P-1} a_q x_{t-q}$ , les autres composantes ayant été calculées et mémorisées après réception des précédents échantillons.

Dans l'exemple représenté sur la figure 3, le filtre de prédiction 32 a une structure classique en treillis, les coefficients de prédiction $a_q$ ($1 \leq q < P$) étant représentés par les P-1 coefficients de réflexion associés $r_1,..., r_{P-1}$. Les coefficients de réflexion $r_i$ sont par exemple obtenus par un module 34 conformément à l'algorithme bien connu de Levinson-Durbin, basé sur les autocorrélations $\phi(i)$ du signal d'entrée calculées par un module 36. L'algorithme de Levinson-Durbin exécuté par le module 34 a l'expression rappelée ci-dessous :

$$E(0) = \phi(0)$$

Pour i allant de 1 à P-1, faire :

$$r_i = \left[ \phi(i) + \sum_{j=1}^{i-1} a_j^{i-1} . \phi(i-j) \right] \Big/ E(i-1)$$

$$a_i^i = -r_i$$

$$E(i) = \left(1 - r_i^2\right) E(i-1)$$

Pour j allant de 1 à i-1, faire :

$$a_j^i = a_j^{i-1} - r_i . a_{i-j}^{i-1}$$

Fin Pour

Fin Pour

Les coefficients de réflexion $r_i$ fournis au filtre 32 sont ceux obtenus à l'issue de l'itération P-1, de même que les coefficients $a_q$ de la relation (11) $\left(a_q = a_q^{P-1}\right)$. La quantité E(P-1) est l'énergie de l'erreur résiduelle de prédiction.

Les coefficients de corrélation $\phi(i)$ sont calculés par le module 36 selon :

$$\phi(i) = \sum_{j=0}^{N-1} \tilde{x}(j) . \tilde{x}(j-i) \qquad (14)$$

où $\tilde{x}(j) = x_{t-j} . f(j)$ représente le signal d'entrée multiplié par une fonction de fenêtrage classique telle qu'une fonction rectangulaire, de Hamming ou autre.

Le calcul des corrélations $\phi(i)$ et l'algorithme de Levinson-Durbin, qui équivaut à une minimisation de l'énergie de prédiction E(P-1), sont exécutés sur des trames de N échantillons du signal d'entrée, N étant un nombre du même ordre de grandeur que la longueur L de la réponse impulsionnelle du filtre d'identification 18.

A titre d'exemple, les signaux étant échantillonnés à une fréquence Fe = 8 kHz, le filtre 18 peut avoir L = 256 coefficients, et la taille des trames peut être N = 160, c'est-à-dire que les trames sont de 20 ms. Dans une application de phonie, on peut considérer que, sur une telle durée, les signaux de parole sont quasi-stationnaires, ce qui valide l'une des hypothèses faites dans la dérivation de l'algorithme pseudo-APA à partir de l'algorithme APA. En général, cette durée du trame pourra être prise supérieure à 5 ms.

Les trames du signal d'entrée traitées par les modules d'analyse prédictive 34, 36 sont de préférence recouvrantes, ce qui permet de tenir compte du caractère non-stationnaire du signal. L'analyse prédictive est alors effectuée tous les K échantillons du signal d'entrée, avec K < N. A titre d'exemple, la durée de recouvrement entre deux trames successives peut être de l'ordre de 15 ms. Avec l'exemple numérique précédent, cela correspond à K = 40, chaque trame étant composé de quatre blocs successifs.

Quand N est un multiple de K, ceci permet en outre de simplifier le calcul des coefficients de corrélation par le module 36. Après réception de chaque bloc de K valeurs du signal d'entrée $x_t$, il lui suffit de calculer, pour chaque index i, une corrélation partielle correspondant aux K termes les plus récents de l'équation (14), et de mettre à jour les corrélations $\phi(i)$ en leur ajoutant les corrélations partielles qui viennent d'être calculées et en leur retranchant les corrélations partielles calculées N/K blocs précédemment.

On notera que d'autres techniques peuvent être employées pour mettre en oeuvre le filtre de prédiction. On peut ainsi utiliser une méthode autre que l'algorithme de Levinson-Durbin pour calculer les coefficients de réflexion $r_i$ ou une autre structure du filtre de prédiction basée sur les coefficients de réflexion $r_i$. On peut également utiliser une autre structure connue du filtre de prédiction basée directement sur les coefficients de prédiction $a_q$, ou sur les coefficients LAR (« Log-Area-Ratio », $LAR_i = \log_{10}[(1-r_i)/(1+r_i)]$), ou encore sur les coefficients LSP (« Line Spectrum Pair ») ...

Le dispositif selon l'invention offre la possibilité de faire varier l'ordre P-1 de la prédiction en fonction des caractéristiques instantanées du signal d'entrée. En particulier, on peut évaluer la stationnarité du signal $x_t$, par exemple en analysant les coefficients de corrélation ou de corrélation partielle calculés par le module 36, afin d'adopter un ordre de prédiction P-1 relativement élevé lorsque le signal d'entrée est plutôt stationnaire, et un ordre de prédiction plus faible en présence de non-stationnarités.

Tableau I

| | NLMS | APA exact | Pseudo-APA |
|---|---|---|---|
| Complexité théorique par échantillon (en nombre d'opérations élémentaires) | 3L | $2\,LP + K_{inv}\,P^2$ | $Max\{3L,\ \dfrac{N}{2}P + (P'+5).P'\}$ |
| Complexité/échantillon avec la configuration : Fe = 8kHz L = 256 coefficients N = 160 (20ms) P' = P-1 = 8 | 768 op. 6,14 Mflops | > 4096 op. > 32,7 Mflops | 824 op. 6,6 Mflops |

Il est possible d'évaluer la complexité arithmétique de l'algorithme pseudo-APA. Les caractéristiques pertinentes sont résumées dans le Tableau I, où elles sont comparées à celles des algorithmes NLMS et APA exact d'ordre P, dans une configuration typique de l'annulation d'écho. Dans le tableau, P désigne l'ordre maximal de l'algorithme pseudo-APA que peut mettre en oeuvre le circuit 16, et P' l'ordre effectivement utilisé dans l'exemple comparatif.

On constate que la complexité arithmétique de l'algorithme pseudo-APA est sensiblement équivalente à celle du NLMS dans le cas d'un filtre d'identification comportant L = 256 coefficients, et pour un filtre de prédiction dont les coefficients sont évalués toutes les 5 ms sur des trames de 20 ms (K = 40, N = 160). L'invention propose ainsi des algorithmes approchant les performances des algorithmes de projection affine d'ordre élevé (typiquement supérieur à 4) pour une complexité inférieure à celle de l'algorithme exact de projection affine d'ordre 2.

Matériellement, le dispositif d'identification 16 peut être réalisé à partir de circuits du commerce, notamment des processeurs de traitement de signal en temps réel (DSP) à arithmétique flottante couramment utilisés (TMS320C3X et TMS320C4X vendus par la société Texas Instruments, AD21061 vendu par la société Analog Devices ...). Des processeurs à arithmétique fixe peuvent également être utilisés, en respectant les précautions usuelles de cadrage approprié des données dans les traitements.

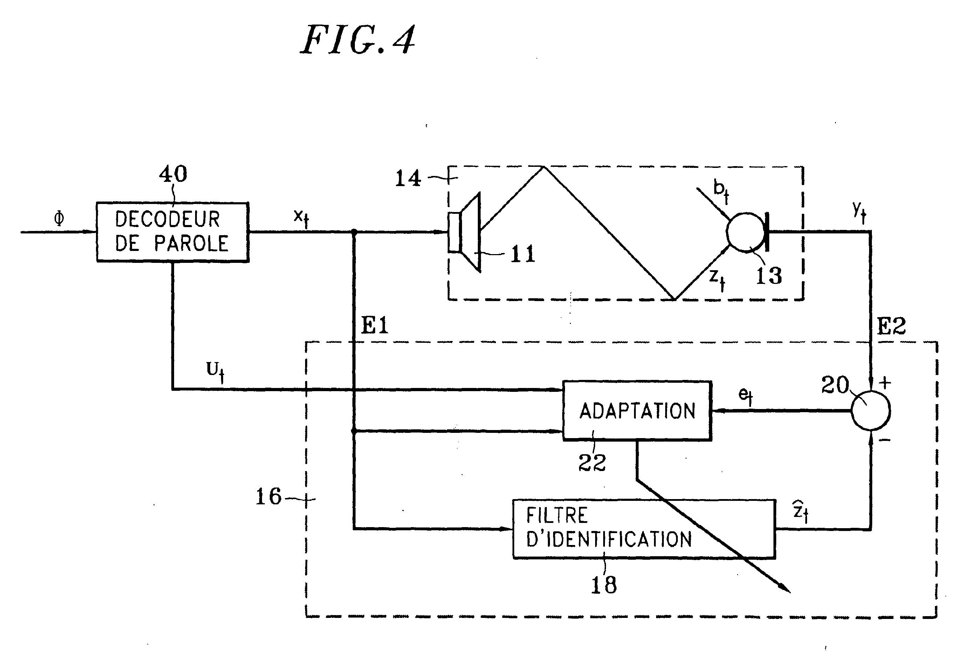

Dans la variante de réalisation représentée schématiquement sur la figure 4, le signal d'entrée $x_t$ est un signal de parole reconstruit par un décodeur 40 à partir d'un flux binaire d'entrée $\Phi$. Le flux binaire $\Phi$ a été produit par un codeur dual du décodeur 40, situé dans le réseau de communication ou encore dans le terminal utilisé par le locuteur distant.

A titre d'exemple, le codeur/décodeur peut correspondre au codec RPE-LTP employé dans le système GSM de radiotéléphonie cellulaire (voir Spécification GSM 06.01 diffusée par l'European Telecommunications Standard Institute). Ce codeur, comme une majorité des codeurs audio numériques d'utilisation courante, procède à une analyse par prédiction linéaire sur des trames du signal de parole correspondant à une zone de quasi-stationnarité du signal, ce qui répond bien au besoin de la présente invention. Dans le cas du GSM, les trames sont de 20 ms. Le codeur inclut dans le flux binaire $\Phi$ qu'il délivre d'une part des paramètres de quantification des coefficients LAR évoqués plus haut, qui caractérisent le filtre de prédiction linéaire d'ordre 10 du signal de parole, et d'autre part des paramètres de quantification d'un signal d'excitation correspondant au résidu de prédiction linéaire.

Le décodeur 40 comporte des circuits qui récupèrent le signal d'excitation à partir de ses paramètres de quantification lus dans le flux $\Phi$, et un filtre de synthèse inverse du filtre de prédiction d'ordre 10, auquel sont fournis les coefficients déduits des LAR quantifiés. Le filtre de synthèse reçoit le signal d'excitation, et délivre le signal de parole décodé $x_t$. Le décodeur 40 peut donc obtenir les paramètres de prédiction linéaire dans le flux $\Phi$, à la place des modules 34 et 36 du dispositif de la figure 3. Il peut en outre délivrer le résidu de prédiction (correspondant au signal d'excitation du filtre de synthèse) formant les composantes du vecteur $U_t$ utiles au module d'adaptation 22.

Dans le cadre d'un équipement comportant un décodeur de parole et un annuleur d'écho adaptatif, on voit que l'utilisation de l'algorithme pseudo-APA conformément au schéma de la figure 4 n'introduit pas de complexité supplémentaire par rapport au NLMS, quel que soit l'ordre P.

**Revendications**

1. Procédé d'identification adaptative pour estimer la réponse d'un système (10) à un signal d'entrée, dans lequel : on reçoit d'une part le signal d'entrée et d'autre part un signal d'observation dont une composante est ladite réponse au signal d'entrée ; on détermine un signal d'erreur et à un instant t selon l'expression $e_t = y_t - X_t^T H_{t-1}$ , où $y_t$ désigne la valeur du signal d'observation à l'instant t, $H_{t-1}$ est un vecteur-colonne composé de L coefficients d'un filtre d'identification (18) à réponse impulsionnelle finie représentative de la réponse impulsionnelle du système, et $X_t^T = (x_t, x_{t-1}, \cdots, x_{t-L+1})$ est un vecteur-ligne composé des valeurs $x_t$, $x_{t-1}$,..., $x_{t-L+1}$ du signal d'entrée à l'instant t et aux L-1 instants précédents ; et on adapte les L coefficients du filtre d'identification en tenant compte du signal d'entrée et du signal d'erreur, **caractérisé en ce qu'**on obtient des paramètres de prédiction du signal d'entrée, minimisant l'énergie d'un résidu de prédiction sur des trames successives du signal d'entrée, et **en ce que** l'adaptation des L coefficients du filtre d'identification consiste à ajouter au vecteur-colonne $H_{t-1}$ un vecteur-colonne proportionnel à $\dfrac{e_t}{X_t^T U_t + \lambda} U_t$ , Ut, où $U_t$ est un vecteur-colonne composé des L valeurs du résidu de prédiction du signal d'entrée à l'instant t et aux L-1 instants précédents, et $\lambda$ un coefficient positif ou nul.

2. Procédé selon la revendication 1, dans lequel lesdites trames du signal d'entrée ont une durée d'au moins 5 millisecondes.

3. Procédé selon la revendication 1 ou 2, dans lequel lesdits trames du signal d'entrée présentent des recouvrements mutuels.

4. Procédé selon l'une quelconque des revendications 1 à 3, dans lequel on effectue une analyse par prédiction linéaire d'ordre P-1 du signal d'entrée, et dans lequel le vecteur-colonne $U_t$ a pour expression $U_t = X_t + \sum_{q=1}^{P-1} a_q X_{t-q}$ , où les $a_q$ désignent les coefficients de prédiction linéaire résultant de ladite analyse.

5. Procédé selon la revendication 4, dans lequel l'ordre P-1 de la prédiction linéaire est au moins égal à 5.

6. Procédé selon la revendication 4 ou 5, dans lequel l'ordre P-1 de la prédiction linéaire est une fonction d'une stationnarité estimée du signal d'entrée.

7. Procédé selon l'une quelconque des revendications 1 à 3, dans lequel le signal d'entrée ($x_t$) est un signal de parole restitué par un décodeur (40) à partir d'un flux binaire d'entrée ($\Phi$), et dans lequel les paramètres de prédiction du signal d'entrée sont extraits du flux binaire d'entrée par le décodeur.

8. Procédé selon la revendication 7, dans lequel le décodeur (40) fournit le résidu de prédiction ($U_t$) pour l'adaptation des L coefficients du filtre d'identification (18).

9. Dispositif d'identification adaptative pour estimer la réponse d'un système (10) auquel est appliqué un signal d'entrée, comprenant :

   - une première entrée (E1) recevant le signal d'entrée ;
   - une seconde entrée (E2) recevant un signal d'observation dont une composante est une réponse du système au signal d'entrée ;
   - un filtre d'identification (18) à réponse impulsionnelle finie représentative de la réponse impulsionnelle du système ;
- un soustracteur (20) produisant un signal d'erreur en soustrayant du signal d'observation le signal d'entrée filtré par le filtre d'identification ; et
- des moyens (22) d'adaptation des coefficients du filtre d'identification en fonction du signal d'entrée et du signal d'erreur,

dans lequel le signal d'erreur et produit par le soustracteur à un instant t a pour expression $e_t = y_t - X_t^T H_{t-1}$ ,

où $y_t$ désigne la valeur du signal d'observation à l'instant t, $H_{t-1}$ est un vecteur-colonne composé de L coefficients du filtre d'identification, et $X_t^T = (x_t, x_{t-1}, \cdots, x_{t-L+1})$ est un vecteur-ligne composé des valeurs $x_t$, $x_{t-1}$,…, $x_{t-L+1}$ du signal d'entrée à l'instant t et aux L-1 instants précédents, **caractérisé en ce qu'**il comprend en outre des moyens (32, 34, 36) pour obtenir des paramètres de prédiction du signal d'entrée, minimisant l'énergie d'un résidu de prédiction sur des trames successives du signal d'entrée, et **en ce que** les moyens d'adaptation (22) sont agencés pour mettre à jour les L coefficients du filtre d'identification (18) en ajoutant au vecteur-colonne $H_{t-1}$ un

vecteur-colonne proportionnel à $\dfrac{e_t}{X_t^T U_t + \lambda} U_t$ , où $U_t$ est un vecteur-colonne composé des L valeurs du résidu de prédiction du signal d'entrée à l'instant t et aux L-1 instants précédents, et $\lambda$ un coefficient positif ou nul.

10. Dispositif selon la revendication 9, dans lequel lesdites trames du signal d'entrée ont une durée d'au moins 5 millisecondes.

11. Dispositif selon la revendication 9 ou 10, dans lequel lesdites trames du signal d'entrée présentent des recouvrements mutuels.

12. Dispositif selon l'une quelconque des revendications 9 à 11, dans lequel les moyens pour obtenir les paramètres de prédiction du signal d'entrée comprennent des moyens (32, 34) d'analyse par prédiction linéaire d'ordre P-1 du signal d'entrée, et dans lequel le vecteur-colonne $U_t$ a pour expression $U_t = X_t + \sum_{q=1}^{P-1} a_q X_{t-q}$ , où les $a_q$

désignent les coefficients de prédiction linéaire produits par les moyens d'analyse.

13. Dispositif selon la revendication 12, dans lequel l'ordre P-1 de la prédiction linéaire est au moins égal à 5.

14. Dispositif selon la revendication 12 ou 13, dans lequel l'ordre P-1 de la prédiction linéaire est une fonction d'une stationnarité estimée du signal d'entrée.

15. Dispositif selon l'une quelconque des revendications 9 à 11, dans lequel le signal d'entrée ($x_t$) est un signal de parole restitué par un décodeur (40) à partir d'un flux binaire d'entrée ($\Phi$), et dans lequel les paramètres de prédiction du signal d'entrée sont extraits du flux binaire d'entrée par le décodeur.

16. Dispositif selon la revendication 15, dans lequel le décodeur (40) fournit le résidu de prédiction ($U_t$) aux moyens (22) d'adaptation des coefficients du filtre d'identification (18).

17. Annuleur d'écho adaptatif pour enlever d'un signal de retour ($y_t$) des composantes d'écho d'un signal direct ($x_t$), **caractérisé en ce qu'**il comprend un dispositif d'identification conforme à l'une quelconque des revendications 9 à 16, dont la première entrée (E1) reçoit le signal direct ($x_t$) en tant que signal d'entrée et dont la seconde entrée (E2) reçoit le signal de retour ($y_t$) en tant que signal d'observation, le signal d'erreur ($e_t$) constituant le signal de sortie de l'annuleur d'écho.

**Claims**

1. Adaptive identification method for estimating the response of a system (10) to an input signal, in which: on the one hand the input signal and on the other hand an observation signal, a component of which is said response to the input signal, are received; an error signal $e_t$ is determined at a time t according to the expression

$$e_t = y_t - X_t^T H_{t-1},$$ where $y_t$ denotes the value of the observation signal at the time t, $H_{t-1}$ is a column vector made up of L coefficients of a finite impulse response identification filter (18) representative of the impulse response of the system, and $X_t^T = (x_t, x_{t-1}, ..., x_{t-L+1})$ is a line vector made up of the values $x_t$, $x_{t-1}$,...,$x_{t-L+1}$ of the input signal at the time t and at the L-1 preceding times; and the L coefficients of the identification filter are adapted taking into account the input signal and the error signal, **characterized in that** input signal prediction parameters are obtained, minimizing the energy of a prediction residue over successive frames of the input signal, and **in that** the adaptation of the L coefficients of the identification filter consists in adding to the column vector $H_{t-1}$ a column

vector proportional to $\dfrac{e_t}{X_t^T U_t + \lambda} U_t$, where $U_t$ is a column vector made up of the L values of the prediction residue of the input signal at the time t and at the L-1 preceding times, and $\lambda$ is a positive or zero coefficient.

2. Method according to Claim 1, in which said frames of the input signal have a duration of at least 5 milliseconds.

3. Method according to Claim 1 or 2, in which said frames of the input signal present mutual overlaps.

4. Method according to any one of Claims 1 to 3, in which an analysis is performed based on linear prediction of order P-1 of the input signal, and in which the column vector $U_t$ is expressed $U_t = X_t + \sum\limits_{q=1}^{P-1} a_q X_{t-q}$, where the $a_q$

values denote the linear prediction coefficients resulting from said analysis.

5. Method according to Claim 4, in which the order P-1 of the linear prediction is at least equal to 5.

6. Method according to Claim 4 or 5, in which the order P-1 of the linear prediction is a function of an estimated stationarity of the input signal.

7. Method according to any one of Claims 1 to 3, in which the input signal ($x_t$) is a speech signal restored by a decoder (40) from an input binary stream ($\Phi$), and in which the prediction parameters of the input signal are extracted from the input binary stream by the decoder.

8. Method according to Claim 7, in which the decoder (40) supplies the prediction residue ($U_t$) for adapting the L coefficients of the identification filter (18).

9. Adaptive identification device for estimating the response of a system (10) to which is applied an input signal, comprising:

   - a first input (E1) receiving the input signal;
   - a second input (E2) receiving an observation signal, a component of which is a response from the system to the input signal;
   - a finite impulse response identification filter (18) representative of the impulse response of the system;
   - a subtractor (20) producing an error signal by subtracting from the observation signal the input signal filtered by the identification filter; and
   - means (22) of adapting the coefficients of the identification filter according to the input signal and the error signal,

in which the error signal $e_t$ produced by the subtractor at a time t is expressed $e_t = y_t - X_t^T H_{t-1}$, where

$y_t$ denotes the value of the observation signal at the time t, $H_{t-1}$ is a column vector made up of L coefficients of the identification filter, and $X_t^T = (x_t, x_{t-1}, ..., x_{t-L+1})$ is a line vector made up of the values $x_t, x_{t-1},...,x_{t-L+1}$ of the input signal at the time t and at the L-1 preceding times, **characterized in that** it also comprises means (32, 34, 36) for obtaining the prediction parameters of the input signal, minimizing the energy of a prediction residue over the successive frames of the input signal, and **in that** the adaptation means (22) are arranged to update the L coefficients of the identification filter (18) by adding to the column vector Ht-1 a column vector proportional to

$$\frac{e_t}{X_t^T U_t + \lambda} U_t ,$$ where $U_t$ is a column vector made up of the L values of the prediction residue of the input signal at the time t, and at L-1 preceding times, and $\lambda$ a positive or zero coefficient.

**10.** Device according to Claim 9, in which said frames of the input signal have a duration of at least 5 milliseconds.

**11.** Device according to Claim 9 or 10, in which said frames of the input signal present mutual overlaps.

**12.** Device according to any one of Claims 9 to 11, in which the means for obtaining the prediction parameters of the input signal comprise analysis means (32, 34) based on linear prediction of order P-1 of the input signal, and in which the column vector $U_t$ is expressed $U_t = X_t + \sum_{q=1}^{P-1} a_q X_{t-q}$, where the $a_q$ values denote the linear prediction coefficients produced by the analysis means.

**13.** Device according to Claim 12, in which the order P-1 of the linear prediction is at least equal to 5.

**14.** Device according to Claim 12 or 13, in which the order P-1 of the linear prediction is a function of an estimated stationarity of the input signal.

**15.** Device according to any one of Claims 9 to 11, in which the input signal ($x_t$) is a speech signal restored by a decoder (40) from an input binary stream ($\Phi$), and in which the prediction parameters of the input signal are extracted from the input binary stream by the decoder.

**16.** Device according to Claim 15, in which the decoder (40) supplies the prediction residue ($U_t$) to the means (22) of adapting the coefficients of the identification filter (18).

**17.** Adaptive echo canceller for removing from a return signal ($y_t$) the echo components of a forward signal ($x_t$), **char-acterized in that** it comprises an identification device in accordance with any one of Claims 9 to 16, the first input (E1) of which receives the forward signal ($x_t$) as input signal and the second input (E2) of which receives the return signal ($y_t$) as observation signal, the error signal ($e_t$) forming the output signal of the echo canceller.

**Patentansprüche**

**1.** Verfahren zur adaptiven Identifikation, um die Antwort eines Systems (10) auf ein Eingangssignal zu schätzen, bei dem: einerseits das Eingangssignal und andererseits ein Beobachtungssignal empfangen wird, von dem eine Komponente die Antwort auf das Eingangssignal ist; ein Fehlersignal $e_t$ in einem Zeitpunkt t gemäß dem Ausdruck

$e_t = y_t - X_t^T H_{t-1}$ bestimmt wird, wobei $y_t$ den Wert des Beobachtungssignals im Zeitpunkt t bezeichnet, $H_{t-1}$ ein Spaltenvektor ist, der aus L Koeffizienten eines Identifikationsfilters (18) mit endlicher Impulsantwort besteht, die für die Impulsantwort des Systems repräsentativ ist, und $X_t^T = (x_1, x_{t-1}, ..., x_{t-L+1})$ ein Zeilenvektor ist, der aus den Werten $X_t, x_{t-1}, ..., X_{t-L+1}$ des Eingangssignals im Zeitpunkt t und in den L-1 vorhergehenden Zeitpunkten zusammengesetzt ist; und die L Koeffizienten des Identifikationsfilters unter Berücksichtigung des Eingangssignals und des Fehlersignals eingestellt werden, **dadurch gekennzeichnet, dass** Vorhersageparameter des Eingangssignals erhalten werden, wodurch die Energie eines Vorhersagerests in aufeinander folgenden Rahmen des Eingangssignals minimiert wird, und dass die Einstellung der L Koeffizienten des Identifikationsfilters darin besteht, zum Spaltenvektor $H_{t-1}$ einen Spaltenvektor proportional zu $\dfrac{e_t}{X_t^T U_t + \lambda} U_t$ hinzuzufügen, wobei $U_t$ ein Spaltenvektor ist, der aus den L Werten des Vorhersagerests des Eingangssignals im Zeitpunkt t und den L-1 vorhergehenden Zeitpunkten zusammengesetzt ist, und $\lambda$ ein positiver Koeffizient oder Null ist.

2. Verfahren nach Anspruch 1, bei dem die Rahmen des Eingangssignals eine Dauer von mindestens 5 Millisekunden haben.

3. Verfahren nach Anspruch 1 oder 2, bei dem die Rahmen des Eingangssignals gegenseitige Überdeckungen aufweisen.

4. Verfahren nach einem der Ansprüche 1 bis 3, bei dem eine Analyse durch lineare Vorhersage der Ordnung P-1 des Eingangssignals durchgeführt wird, und bei dem der Spaltenvektor $U_t$ durch

$$U_t = X_t + \sum_{q=1}^{P-1} a_q X_{t-q}$$ ausgedrückt wird, wobei die $a_q$ die Koeffizienten der linearen Vorhersage bezeichnen, die aus der Analyse resultieren.

5. Verfahren nach Anspruch 4, bei dem die Ordnung P-1 der linearen Vorhersage mindestens gleich 5 ist.

6. Verfahren nach Anspruch 4 oder 5, bei dem die Ordnung P-1 der linearen Vorhersage eine Funktion einer geschätzten Stationarität des Eingangssignals ist.

7. Verfahren nach einem der Ansprüche 1 bis 3, bei dem das Eingangssignal ($x_t$) ein Sprachsignal ist, das von einem Decoder (40) ausgehend von einem binären Eingangsfluss ($\Phi$) wiederhergestellt wird und bei dem die Vorhersageparameter des Eingangssignals vom Decoder aus dem binären Eingangsfluss extrahiert werden.

8. Verfahren nach Anspruch 7, bei dem der Decoder (40) den Vorhersagerest ($U_t$) zur Einstellung der L Koeffizienten des Identifikationsfilters (18) liefert.

9. Vorrichtung zur adaptiven Identifikation, um die Antwort eines Systems (10) zu schätzen, an das ein Eingangssignal angelegt wird, die aufweist:

  - einen ersten Eingang (E1), der das Eingangssignal empfängt;
  - einen zweite Eingang (E2), der ein Beobachtungssignal empfängt, von dem eine Komponente eine Antwort des Systems auf das Eingangssignal ist;
  - ein Identifikationsfilter (18) mit endlicher Impulsantwort, die für die Impulsantwort des Systems repräsentativ ist;
  - ein Subtrahierglied (20), das ein Fehlersignal erzeugt, indem es vom Beobachtungssignal das vom Identifikationsfilter gefilterte Eingangssignal subtrahiert; und
  - Mittel (22) zur Einstellung der Koeffizienten des Identifikationsfilters in Abhängigkeit vom Eingangssignal und vom Fehlersignal,

bei der das Fehlersignal $e_t$, das vom Subtrahierglied in einem Zeitpunkt t erzeugt wird, durch $e_t = y_t - X_t^T H_{t-1}$ ausgedrückt wird, wobei $y_t$ den Wert des Beobachtungssignals im Zeitpunkt t bezeichnet, $H_{t-1}$ ein Spaltenvektor ist, der aus L Koeffizienten des Identifikationsfilters zusammengesetzt ist, und $X_t^T = (x_t, \quad x_{t-1}, \quad \ldots, \quad x_{t-L+1})$ ein Zeilenvektor ist, der aus den Werten $x_t, x_{t-1}, \ldots, x_{t-L+1}$ des Eingangssignals im Zeitpunkt t und den L-1 vorhergehenden Zeitpunkten zusammengesetzt ist, **dadurch gekennzeichnet, dass** sie weiter Mittel (32, 34, 36) aufweist, um Vorhersageparameter des Eingangssignals zu erhalten, wodurch die Energie eines Vorhersagerests in aufeinander folgenden Rahmen des Eingangssignals minimiert wird, und dass die Einstellmittel (22) ausgelegt sind, um die L Koeffizienten des Identifikationsfilters (18) zu aktualisieren,

indem zum Spaltenvektor $H_{t-1}$ ein Spaltenvektor proportional zu $\dfrac{e_t}{X_t^T U_t + \lambda} U_t$ hinzugefügt wird, wobei $U_t$ ein Spaltenvektor ist, der aus den L Werten des Vorhersagerests des Eingangssignals im Zeitpunkt t und den L-1 vorhergehenden Zeitpunkten zusammengesetzt ist, und $\lambda$ ein positiver Koeffizient oder Null ist.

10. Vorrichtung nach Anspruch 9, bei der die Rahmen des Eingangssignals eine Dauer von mindestens 5 Millisekunden haben.

11. Vorrichtung nach Anspruch 9 oder 10, bei der die Rahmen des Eingangssignals gegenseitige Überdeckungen aufweisen.

12. Vorrichtung nach einem der Ansprüche 9 bis 11, bei der die Mittel, um die Vorhersageparameter des Eingangssignals zu erhalten, Mittel (32, 34) zur Analyse durch lineare Vorhersage der Ordnung P-1 des Eingangssignals aufweisen, und bei der der Spaltenvektor $U_t$ durch $U_t = X_t + \sum\limits_{q=1}^{P-1} a_q X_{t-q}$ ausgedrückt wird, wobei die $a_q$ die Koeffizienten der linearen Vorhersage bezeichnen, die von den Analysemitteln erzeugt werden.

13. Vorrichtung nach Anspruch 12, bei der die Ordnung P-1 der linearen Vorhersage mindestens gleich 5 ist.

14. Vorrichtung nach Anspruch 12 oder 13, bei der die Ordnung P-1 der linearen Vorhersage eine Funktion einer geschätzten Stationarität des Eingangssignals ist.

15. Vorrichtung nach einem der Ansprüche 9 bis 11, bei der das Eingangssignal ($x_t$) ein Sprachsignal ist, das von einem Decoder (40) ausgehend von einem binären Eingangsfluss ($\Phi$) wiederhergestellt wird, und bei der die Vorhersageparameter des Eingangssignals vom Decoder aus dem binären Eingangsfluss extrahiert werden.

16. Vorrichtung nach Anspruch 15, bei der der Decoder (40) den Vorhersagerest ($U_t$) an die Mittel (22) zur Einstellung der Koeffizienten des Identifikationsfilters (18) liefert.

17. Adaptiver Echokompensator, um aus einem Rückmeldesignal ($y_t$) Echokomponenten eines direkten Signals ($x_t$) zu entnehmen, **dadurch gekennzeichnet, dass** er eine Identifikationsvorrichtung gemäß einem der Ansprüche 9 bis 16 aufweist, deren erster Eingang (E1) das direkte Signal ($x_t$) als Eingangssignal empfängt, und deren zweiter Eingang (E2) das Rückmeldesignal ($y_t$) als Beobachtungssignal empfängt, wobei das Fehlersignal ($e_t$) das Ausgangssignal des Echokompensators bildet.

FIG.1

EP 1 039 736 B1

# FIG.2

FIG.3

EP 1 039 736 B1

*FIG.4*

DECODEUR DE PAROLE 40

FILTRE D'IDENTIFICATION 18

ADAPTATION 22

$\phi$

$x_t$

$u_t$

$y_t$

$b_t$

$z_t$

$\hat{z}_t$

$e_t$

E1

E2

11

13

14

16

20